(19) 

Europäisches Patentamt / European Patent Office / Office européen des brevets

(11) **EP 4 310 506 A1**

(12) **EUROPEAN PATENT APPLICATION**
published in accordance with Art. 153(4) EPC

(43) Date of publication:
**24.01.2024 Bulletin 2024/04**

(21) Application number: **21931708.8**

(22) Date of filing: **25.11.2021**

(51) International Patent Classification (IPC):
***G01N 35/00*** *(2006.01)*

(52) Cooperative Patent Classification (CPC):
**G01N 35/00**

(86) International application number:
**PCT/JP2021/043112**

(87) International publication number:
**WO 2022/195965 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021 JP 2021044504**

(71) Applicant: **HITACHI HIGH-TECH CORPORATION Tokyo 105-6409 (JP)**

(72) Inventors:
- **SUENARI, Tsukasa**
  **Tokyo 105-6409 (JP)**
- **OKUSA, Takenori**
  **Tokyo 105-6409 (JP)**

(74) Representative: **Strehl Schübel-Hopf & Partner Maximilianstrasse 54 80538 München (DE)**

(54) **AUTOMATIC ANALYSIS DEVICE**

(57)    There is provided an automatic analyzer that stops a back-flowing waste fluid from reaching a cleaning tank when bubbles are produced in a waste fluid pipe. An automatic analyzer includes: a cleaning tank in which cleaning using a detergent is performed with analysis operation of a specimen; and a waste fluid pipe through which a waste fluid flowing from the cleaning tank is discharged. The waste fluid pipe has an upward pipe branched upward. At a tip end of the upward pipe, opening is provided. The opening is disposed blow from the cleaning tank.

FIG.4

EP 4 310 506 A1

**Description**

Technical field

The present invention relates to an automatic analyzer.

Background Art

An automatic analyzer is an apparatus that automatically qualitatively or quantitatively analyzes specific components contained in specimens such as blood and urine. In hospitals and medical facilities, rapid output of analysis results for a large number of specimens is required, and thus it is desired that analysis operations of automatic analyzers be stopped as little as possible.

Patent Literature 1 discloses the automatic analyzer that stores a waste fluid generated due to an analysis operation in a buffer tank in order to waste the waste fluid from a waste fluid tank after temporary blocking of discharge of the waste fluid to the waste fluid tank and before wasting of the waste fluid to the waste fluid tank without stopping the analysis operation.

Citation List

Patent Literature

Patent Literature 1: Japanese Unexamined Patent Application Publication No. 2016-95133

Summary of Invention

Technical Problem

However, in Patent Literature 1, a backward flow when bubbles are generated in a waste fluid pipe from which the waste fluid is discharged is not considered. A detergent used for cleaning each part in a cleaning tank due to an analysis operation may cause bubbles that cause the waste fluid to flow backward to be generated in the waste fluid pipe. In addition, when waste fluid arrangement provided in hospital and facilities is used instead of waste fluid tanks, the arrangement is different for each facility, and the sizes and shapes of the arrangement vary. Therefore, a backward flow may easily occur. The waste fluid that reaches the cleaning tank due to a backward flow and overflows may cause contamination and a failure.

An object of the present invention is to provide the automatic analyzer that prevents the waste fluid that flows backward when bubbles are generated in the waste fluid pipe from reaching a cleaning tank.

Solution to Problem

To achieve the above-described object, according to the present invention, the automatic analyzer includes a cleaning tank in which cleaning is performed using a detergent during an operation of analyzing a specimen, and the waste fluid pipe from which the waste fluid that flows from the cleaning tank is discharged. The waste fluid pipe includes an upward pipe branched upward, an opening is disposed at an end of the upward pipe and located below the cleaning tank.

Advantageous Effects of Invention

According to the present invention, it is possible to provide the automatic analyzer that prevents the waste fluid that flows backward when bubbles are generated in the waste fluid pipe from reaching a cleaning tank.

Brief Description of Drawings

Fig. 1 is a plan view showing an exemplary configuration of an automatic analyzer.
Fig. 2 is a diagram illustrating the waste fluid pipe of the automatic analyzer,
Fig. 3 is a diagram illustrating a back flow when bubbles are produced in a waste fluid pipe.
Fig. 4 is a diagram illustrating a waste fluid pipe having an upward pipe.

Fig. 5 is a diagram illustrating a tray provided around the upward pipe.

Fig. 6 is a diagram showing a water leakage sensor provided on the tray.

Fig. 7 is a diagram showing a process flow based on the output of the water leakage sensor.

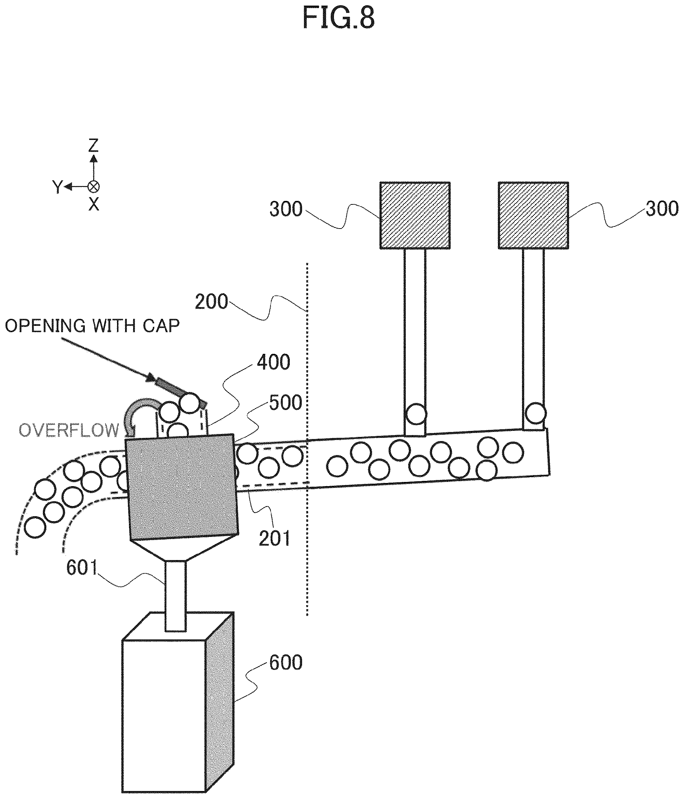

Fig. 8 is a diagram showing a tank connected to the tray.

Fig. 9 is a diagram showing a water level sensor provided on the tank.

Fig. 10 is a diagram showing a process flow based on the output of the water level sensor.

Fig. 11 is a diagram illustrating a high waste fluid arrangement to which a tray provided on a low waste fluid pipe is connected. Description of Embodiments

Hereinafter, preferred Examples of the automatic analyzer according to the present invention are described with reference to the accompanying drawings. The automatic analyzer is an apparatus that analyzes a specimen, such as blood or urine, using a reaction solution obtained by reacting a reagent with the specimen.

Example 1

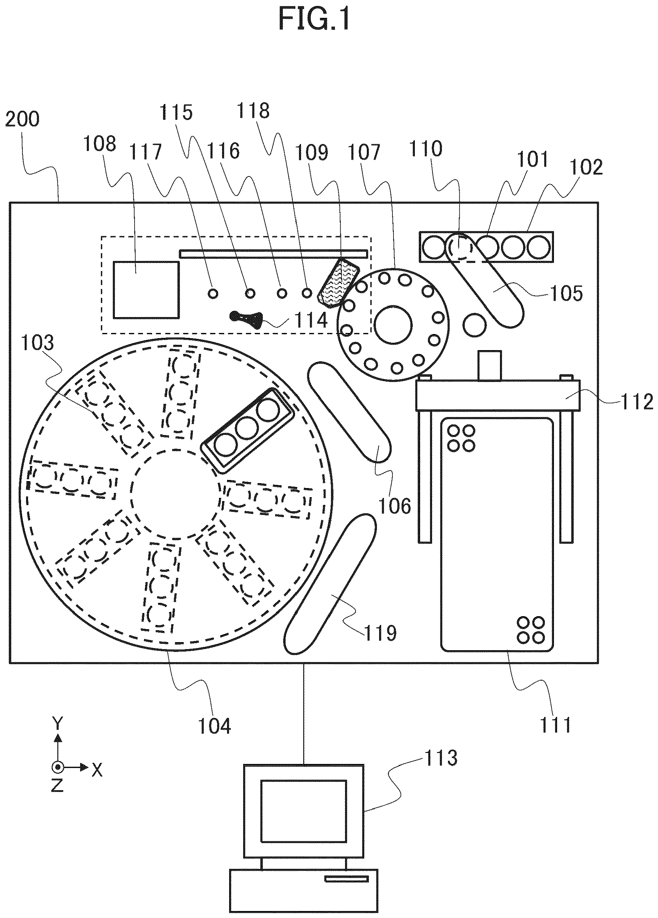

An example of an overall configuration of the automatic analyzer according to the present Example is described with reference to Fig. 1. The automatic analyzer includes a specimen transport unit 102, a reagent disk 104, a specimen dispensing unit 105, a reagent dispensing unit 106, a reagent stirring unit 119, a reaction disk (incubator) 107, a reaction container transport unit 109, a pre-processing probe 114, a measurement unit 108, and a control unit 113. The units are described below. A vertical direction is a Z direction and a horizontal plane is an XY plane.

The specimen transport unit 102 transfers a specimen container 101 containing a specimen such as blood or urine to a specimen aspiration position 110. The reagent disk 104 stores a reagent container 103 containing a reagent to be used for analysis within a predetermined temperature range.

The specimen dispensing unit 105 dispenses the specimen into a reaction container placed on the reaction disk 107 from the specimen container 101 transferred to the specimen aspiration position 110. The reaction container into which the specimen is dispensed and a dispensing chip to be used for dispensing a specimen are stored in a consumable item storing unit 111 and transferred to predetermined positions by a consumable item transport unit 112.

The reagent dispensing unit 106 dispenses, from the reagent container 103 stored on the reaction disk 104, a reagent into the reaction container placed on the reaction disk 107 and containing the specimen dispensed. Before the dispensing of the reagent, the reagent containing magnetic particles and stored in the reagent container 103 is stirred by the reagent stirring unit 119.

The reaction disk 107 keeps the reaction container into which the specimen and the reagent are dispensed within a predetermined temperature range, and accelerates the reaction between the specimen and the reaction to generate a reaction solution. The reaction container transport unit 109 transfers the reaction container containing the reaction solution from the reaction disk 107 to a reaction solution dispensing position 117 via a pre-processing position 115 and a stirring position 116. At the pre-processing position 115, as pre-processing on the reaction solution contained in the reaction container, the pre-processing probe 114 aspirates an unnecessary liquid and discharges a buffer solution. Next, at the stirring position 116, the reaction solution is stirred. Then, at the reaction solution dispensing position 117, a probe (not illustrated) for the measurement unit supplies the reaction solution from the reaction container to the measurement unit 108.

The measurement unit 108 measures physical properties of the supplied reaction solution, such as the amount of emitted light, the amount of scattered light, the amount of transmitted light, a current value, and a voltage value, for example. The physical properties to be measured are not limited thereto. In addition, the measurement unit 108 may receive the reaction container from the reaction container transport unit 109 and measure the physical properties of the reaction solution in a state of being stored in the reaction container. The reaction container containing the reaction solution whose physical properties were measured by the measurement unit 108 is transferred and wasted into a waste hole 118 by the reaction container transport unit 109. The reaction container after the measurement may be cleaned and reused.

The control unit 113 is a device that controls the units included in a cabinet 200 in the automatic analyzer and is configured as, for example, a so-called computer.

The reagent dispensing unit 106 is cleaned using a detergent every time the reagent dispensing unit 106 dispenses a reagent. The reagent stirring unit 119 is cleaned using a detergent every time the reagent stirring unit 119 stirs a reagent. The reaction container after the measurement may be cleaned for reuse. The Waste fluids generated during cleaning of the units are discharged out of the automatic analyzer. The waste fluids discharged out of the automatic analyzer are classified into a high waste fluid containing the specimen and an infective substance, and a low waste fluid other than the high waste fluid.

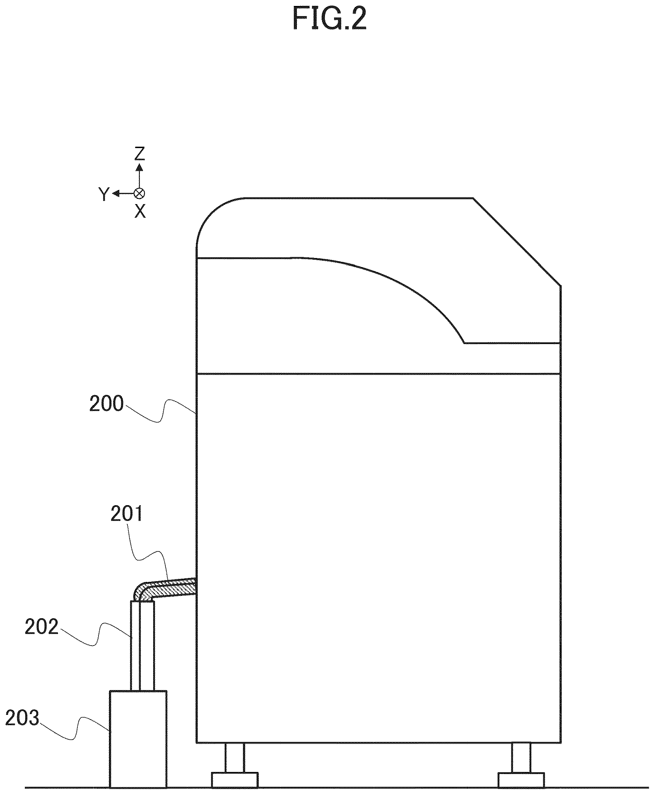

A waste fluid pipe 201 of the automatic analyzer is described with reference to Fig. 2. The waste fluid pipe 201 from which the waste fluid is discharged is disposed on the back surface side of the cabinet 200 and is connected to the waste fluid arrangement 203 via an adjusting pipe 202. The waste fluid arrangement 203 performs sewage treatment on the waste fluid discharged from the automatic analyzer and is disposed in a hospital or a facility. Therefore, the waste fluid arrangement 203 may vary in size. As a pipe for adjusting a length between the waste fluid pipe 201 attached to the automatic analyzer and the waste fluid arrangement 203, the adjusting pipe 202 is used.

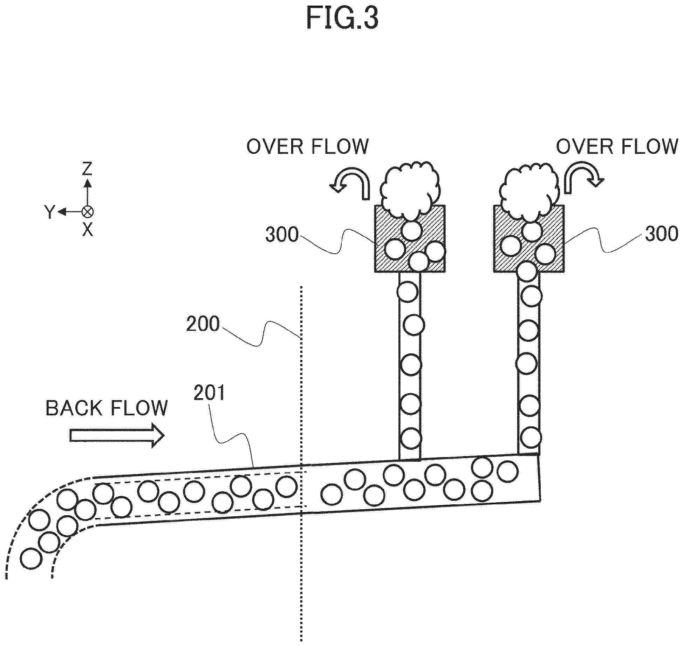

A backward flow when bubbles are generated in the waste fluid pipe 201 is described with reference to Fig. 3. The waste fluid pipe 201 is connected to a cleaning tank 300 in which the reagent dispensing unit 106, the reagent stirring unit 119, and the like are cleaned. The waste fluid that flows from the cleaning tank 300 is discharged from the waste fluid pipe 201. When the waste fluid contains a detergent, bubbles may be generated in the waste fluid pipe 201. When the amount of the generated bubbles is too large, the waste fluid may flow backward, reach the cleaning tank 300, and overflow from the cleaning tank 300. Since the waste fluid that overflowed from the cleaning tank 300 may cause contamination or a failure, it is necessary to prevent the waste fluid from reaching the cleaning tank 300.

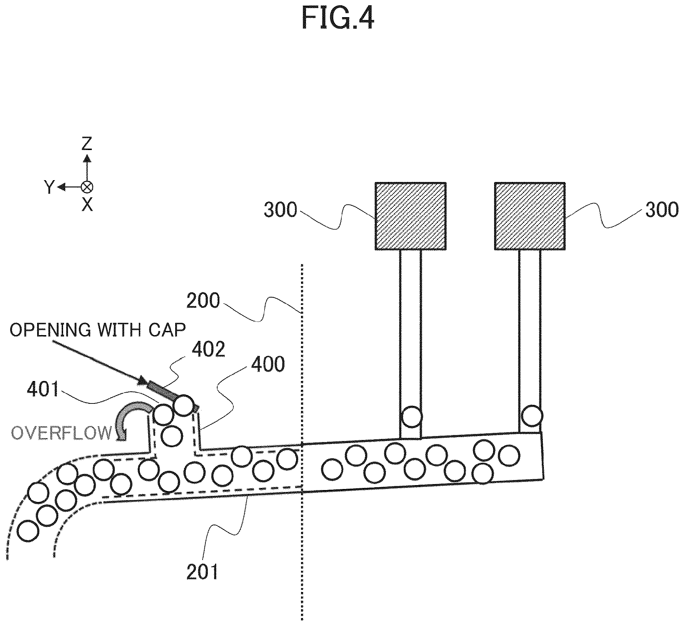

The waste fluid pipe 201 of Example 1 is described with reference to Fig. 4. The waste fluid pipe 201 includes an upward pipe 400 branched upward. An opening 401 that opens upward to the outside is provided at an end of the upward pipe 400. The opening 401 is located below the cleaning tank 300.

According to the configuration of Example 1, the waste fluid that flows backward in the waste fluid pipe 201 is discharged from the opening 401 to the outside and thus does not reach the cleaning tank 300. As a result, it is possible to prevent contamination and a failure.

The opening 401 may be provided with a cap 402 for preventing the diffusion of odors flowing from the waste fluid arrangement 203. The cap 402 is configured to open when the waste fluid flowing backward in the waste fluid pipe 201 comes into contact with the cap 402.

Example 2

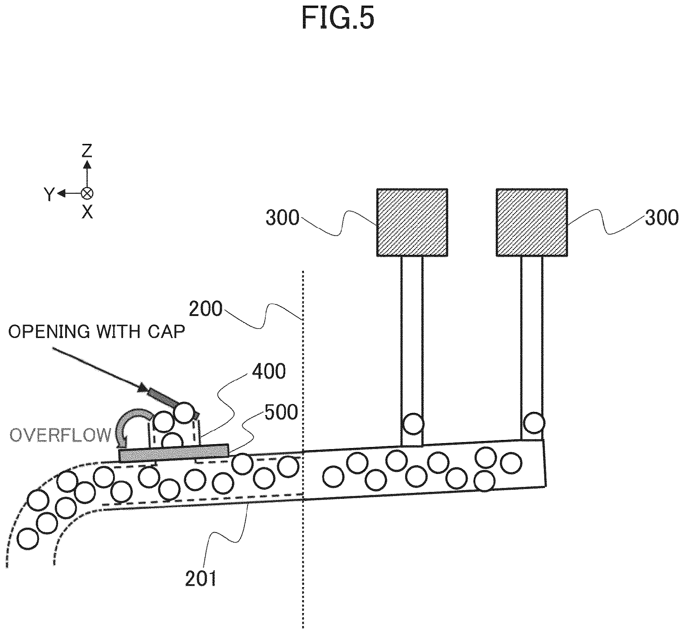

The waste fluid pipe 201 of Example 2 is described with reference to Fig. 5. A configuration upstream of the waste fluid pipe 201 is the same as that in Example 1 and a description thereof is omitted. In Example 2, a receiving tray 500 is provided around an upward pipe 400 included in the waste fluid pipe 201.

According to the configuration of Example 2, similarly to Example 1, the waste fluid that flows backward in the waste fluid pipe 201 is discharged from an opening 401 and thus does not reach a cleaning tank 300. In addition, since the waste fluid discharged from the opening 401 is received by the receiving tray 500, the periphery of the opening 401 does not become dirty. Since a bubble-like waste fluid is discharged from the opening 401 and a liquid amount of bubbles that burst outside the waste fluid pipe 201 is small, the capacity of the receiving tray 500 is sufficient as long as the capacity of the receiving tray 500 corresponds to the liquid volume of the bubbles.

Example 3

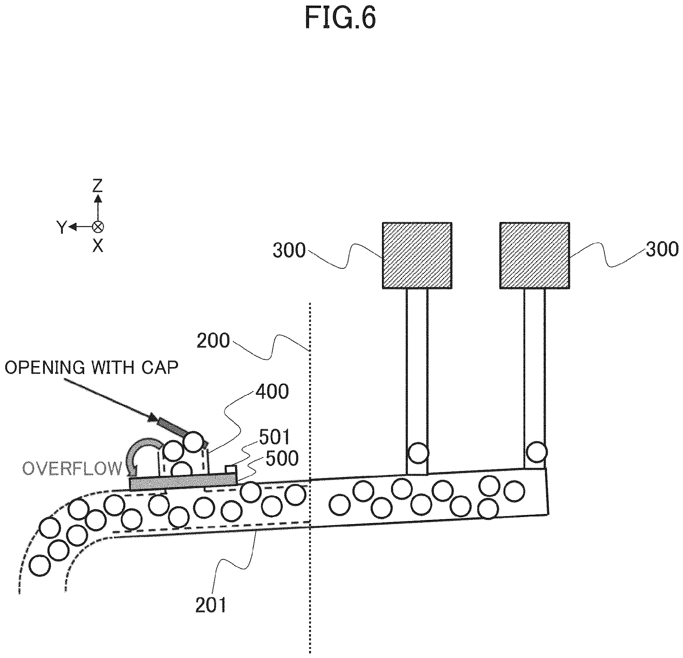

The waste fluid pipe 201 of Example 3 is described with reference to Fig. 6. A configuration upstream of the waste fluid pipe 201 is the same as that in Example 1 and a description thereof is omitted. In Example 3, a water leakage sensor 501 is disposed in a receiving tray 500 disposed around an upward pipe 400. The water leakage sensor 501 is a sensor that detects water leakage by, for example, measuring resistance between electrodes. Upon detecting that the waste fluid flows into the receiving tray 500, the water leakage sensor 501 transmits a detection signal to the control unit 113. The control unit 113 executes a series of processes based on the detection signal transmitted from the water leakage sensor 501.

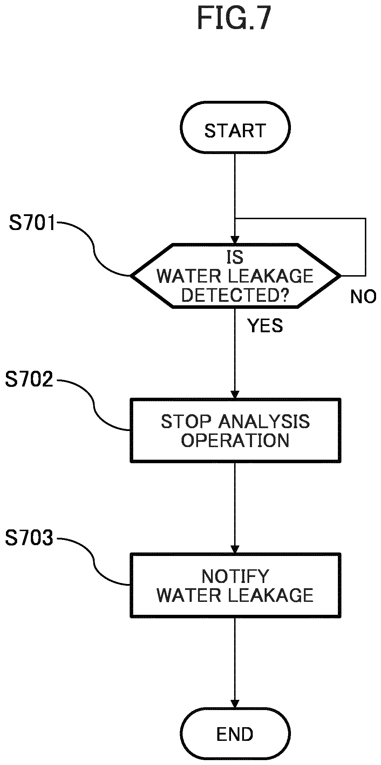

An example of a process procedure of Example 3 is described for each step with reference to Fig. 7.

(S701)

The control unit 113 determines whether wastewater leaked from an opening 401. Whether wastewater leaked is determined based on the detection signal transmitted from the water leakage sensor 501. S701 is repeated until water leakage is detected. When water leakage is detected, the process proceeds to S702.

(S702)

The control unit 113 stops an analysis operation. By stopping the analysis operation, the flow of the waste fluid from a cleaning tank 300 to the waste fluid pipe 201 is stopped.

(S703)

The control unit 113 notifies that the water leakage was detected. The notification of the water leakage is performed by, for example, displaying on a display device such as a liquid crystal display, outputting an alarm sound from a speaker, or the like. A terminal carried by a service person may be notified of the water leakage.

When the waste fluid flows backward in the waste fluid pipe 201 and leaks from the opening 401, the analysis operation is stopped by the process procedure described above. Therefore, it is possible to prevent further water leakage. In addition, since the water leakage is notified, the user can quickly handle the backward flow of the waste fluid.

Example 4

The waste fluid pipe 201 of Example 4 is described with reference to Fig. 6. A configuration upstream of the waste fluid pipe 201 is the same as that in Example 1 and a description thereof is omitted. In Example 4, a bottom surface of a receiving tray 500 disposed around an upward pipe 400 is connected to a tank 600 via a connecting pipe 601. The tank 600 has a capacity larger than that of the receiving tray 500.

According to the configuration of Example 4, similarly to Example 1, the waste fluid that flows backward in the waste fluid pipe 201 is discharged from an opening 401 to the outside and thus does not reach a cleaning tank 300. In addition, after the waste fluid discharged from the opening 401 is received by the receiving tray 500, the waste fluid is collected into the tank 600. Since the tank 600 has a capacity larger than that of the receiving tray 500, the periphery of the opening 401 does not become dirty even when the waste fluid discharged from the opening 401 is not a bubble-like liquid or the amount of the waste fluid is large.

Example 5

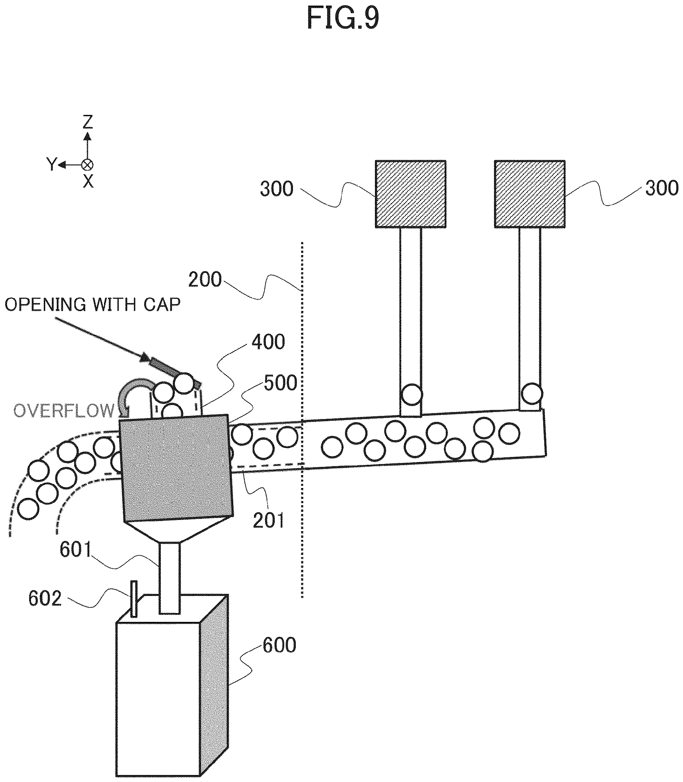

The waste fluid pipe 201 of Example 5 is described with reference to Fig. 9. A configuration upstream of the waste fluid pipe 201 is the same as that in Example 1 and a description thereof is omitted. In Example 5, a water level sensor 602 is disposed in the tank 600 of Example 4. The water level sensor 602 is a sensor that measures a liquid level in the tank 600. The value of the liquid level measured by the water level sensor 602 is transmitted as a measurement signal to the control unit 113. The control unit 113 executes a series of processes based on the measurement signal transmitted from the water level sensor 602.

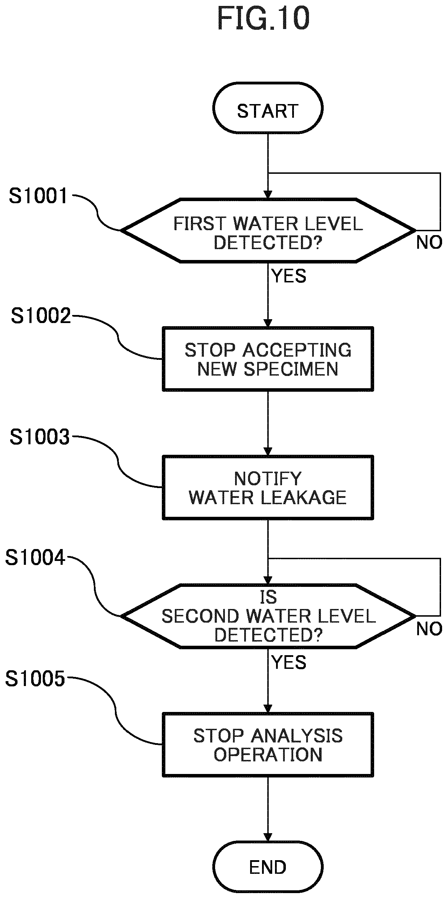

An example of a process procedure of Example 5 is described for each step with reference to Fig. 10.

(S1001)

The control unit 113 determines, based on the measurement signal transmitted from the water level sensor 602, whether the liquid level in the tank 600 reached a first water level. S1001 is repeated until the liquid level reaches the first water level. When the liquid level reaches the first water level, the process proceeds to S1002. The first water level is a value indicating that the waste fluid that flowed backward in the waste fluid pipe 201 started to be discharged from an opening 401. The first water level is lower than a second water level described later.

(S1002)

The control unit 113 stops accepting a new specimen. However, an operation of analyzing a specimen already accepted by the automatic analyzer is continued. When the operation of analyzing the accepted specimen is stopped in the middle, it may be necessary to acquire a specimen again. For example, when the specimen is blood, blood sampling may be required again. Therefore, by continuing the operation of analyzing the accepted specimen, it is possible to reduce the number of specimens required to be reacquired.

(S1003)

The control unit 113 notifies that the water leakage was detected. The notification of the water leakage is performed by, for example, displaying on the display device such as the liquid crystal display, outputting the alarm sound from the speaker, or the like. The terminal carried by the service person may be notified of the water leakage.

(S1004)

The control unit 113 determines, based on the measurement signal transmitted from the water level sensor 602, whether the liquid level in the tank 600 reached the second water level. S1004 is repeated until the liquid level reaches the second water level. When the liquid level reaches the second water level, the process proceeds to S1005. The second water level is a value higher than the first water level and corresponding to the capacity of the tank 600.

(S1005)

The control unit 113 stops the analysis operation. By stopping the analysis operation, the flow of the waste fluid from the cleaning tank 300 to the waste fluid pipe 201 is stopped.

By the process procedure described above, the acceptance of a new specimen is stopped when the waste fluid flows backward in the waste fluid pipe 201 and overflows from the opening 401, and the operation of analyzing the accepted specimen is continued until the liquid level in the tank 600 reaches the second water level. Therefore, it is possible to reduce the number of specimens required to be reacquired. In addition, since the water leakage is notified, the user can quickly handle the backward flow of the waste fluid. When the liquid level reaches the second water level, the analysis operation is stopped and thus it is possible to prevent further overflow.

The second water level may be set based on the number of reaction containers held on a reaction disk 107. Since the operation of analyzing the specimen is continued until the liquid level in the tank 600 reaches the second water level after reaching the first water level, when an operation of analyzing all reaction containers held on the reaction disk 107 during this time period is completed, it is not necessary to reacquire a specimen. That is, when the amount of the waste fluid generated by an analysis operation for one reaction container is V, the number of reaction containers held on the reaction disk 107 is N, the first water level is L1, the second water level is L2, and a cross-sectional area in a horizontal plane of the tank 600 is S, the following formula needs to be satisfied.

$$L2 - L1 \geq N \cdot V / S \quad \cdots \quad (formula\ 1)$$

The second water level may be set such that formula 1 is satisfied. Alternatively, the cross-sectional area S in the horizontal plane of the tank 600 may be set while L1 and L2 are fixed values.

Example 6

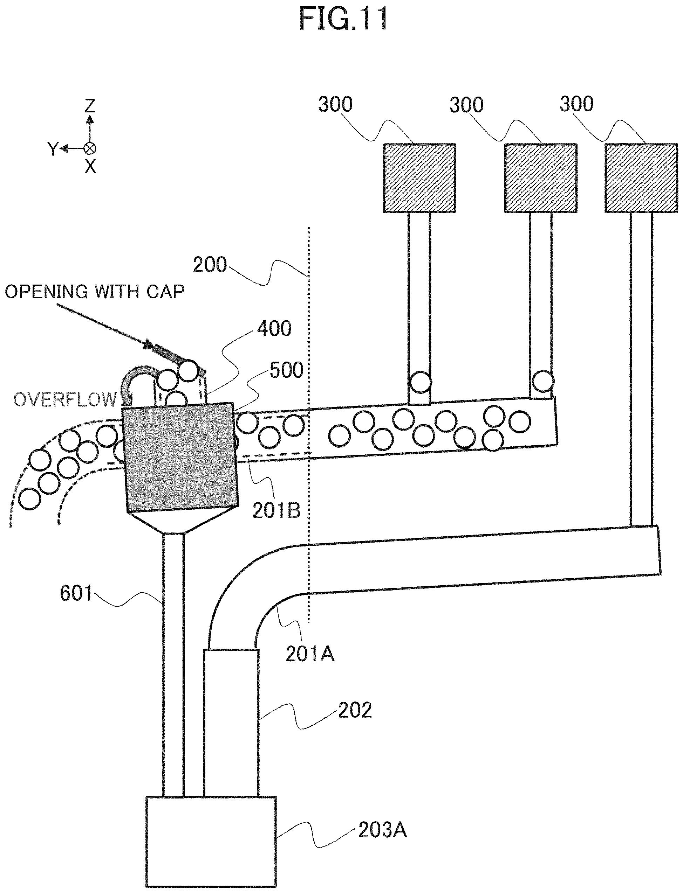

The waste fluid pipe 201 of Example 6 is described with reference to Fig. 11. A configuration upstream of the waste fluid pipe 201 is the same as that in Example 1 and a description thereof is omitted. In Example 6, the waste fluid pipe 201 may be sectioned into a high waste fluid pipe 201A and a low waste fluid pipe 201B.

The high waste fluid pipe 201A is a pipe from which the high waste fluid containing the specimen and an infective substance are discharged. The high waste fluid pipe 201A is connected to a tool with which the specimen comes into contact. The tool is, for example, a cleaning tank 300 in which a reaction container after measurement is cleaned. In addition, the high waste fluid pipe 201A is connected to high waste fluid arrangement 203A via an adjusting pipe 202.

The low waste fluid pipe 201B includes an upward pipe 400 branched upward. An opening 401 is provided at an end of the upward pipe 400 and located below the cleaning tank 300. A receiving tray 500 is disposed around the upward pipe 400, and the high waste fluid arrangement 203A is connected to the bottom surface of the receiving tray 500 via a connecting pipe 601.

According to the configuration of Example 6, similarly to Example 1, the waste fluid that flows backward in the low waste fluid pipe 201B is discharged from the opening 401 to the outside and thus does not reach the cleaning tank 300. In addition, after the waste fluid discharged from the opening 401 is received by the receiving tray 500, the waste fluid is discharged to the high waste fluid arrangement 203A. Therefore, the periphery of the opening 401 does not become dirty. Since wastewater containing a detergent is hardly discharged from the high waste fluid pipe 201A, and the amount of discharged water is small, the liquid hardly flows backward. Similarly to the low waste fluid pipe 201B, the high waste fluid pipe 201A may include an upward pipe 400 having an opening 401 at its end such that the opening 401 is located below the cleaning tank 300.

The plurality of Examples of the present invention are described above. The present invention is not limited to the above-described Examples, and the components may be modified without departing from the gist of the present invention. A plurality of components disclosed in the above-described Examples may be combined. Some components may be removed from all the components indicated in the above-described Examples.

List of Reference Signs

101: specimen container
102: specimen transport unit
103: reagent container
104: reagent disk

105: specimen dispensing unit
106: reagent dispensing unit
107: reaction disk
108: measuring unit
109: reaction container transport unit
110: specimen aspiration position
111: consumable item storing unit
112: consumable item transport unit
113: control unit
114: pre-processing probe
115: pre-processing position
116: stirring position
117: reaction solution dispensing position
118: waste hole
119: reagent stirring unit
200: cabinet
201: waste fluid pipe
201A: high waste fluid pipe
201B: low waste fluid pipe
202: adjusting pipe
203: waste fluid arrangement
203A: high waste fluid arrangement
300: cleaning tank
400: upward pipe
401: opening
402: cap
500: tray
501: water leakage sensor
600: tank
601: connecting pipe
602: water level sensor

## Claims

1. An automatic analyzer comprising:

   a cleaning tank in which cleaning using a detergent is performed with analysis operation of a specimen; and
   a waste fluid pipe through which a waste fluid flowing from the cleaning tank is discharged,
   wherein: the waste fluid pipe has an upward pipe branched upward;
   at a tip end of the upward pipe, opening is provided; and
   the opening is disposed below the cleaning tank.

2. The automatic analyzer according to claim 1,
   wherein a tray is provided around the upward pipe.

3. The automatic analyzer according to claim 2,

   wherein: a water leakage sensor that detects water leakage is provided in the tray; and
   a control unit that controls analysis operation based on a detection signal transmitted from the water leakage sensor is further provided.

4. The automatic analyzer according to claim 3,
   wherein the control unit notifies detection of water leakage by the water leakage sensor.

5. The automatic analyzer according to claim 2,
   wherein the tray is connected to a tank.

**6.** The automatic analyzer according to claim 5, further comprising:

a water level sensor that measures a liquid level height in the tank; and
a control unit that controls analysis operation based on a measurement signal transmitted from the water level sensor.

**7.** The automatic analyzer according to claim 6,

wherein when a liquid level height in the tank reaches a first water level, the control unit stops reception of a new specimen and continues analysis operation of a received specimen; and
when a liquid level height in the tank reaches a second water level higher than the first water level, the control unit stops the analysis operation.

**8.** The automatic analyzer according to claim 1,

wherein: the waste fluid pipe is split into a high waste fluid pipe through which a high waste fluid containing the specimen is discharged and a low waste fluid pipe through which a low waste fluid other than the high waste fluid is discharged;
a tray is provided around the upward pipe of the low waste fluid pipe; and
the tray is connected to a high waste fluid arrangement to which the high waste fluid pipe is connected.

**9.** The automatic analyzer according to claim 1,
wherein the opening is provided with a cap that opens when the waste fluid is brought into contact with the cap.

# FIG.1

# FIG.2

# FIG.3

OVER FLOW

OVER FLOW

300

300

200

201

BACK FLOW

Z

Y

X

# FIG.4

Z
Y ← ⊗
X

300

300

200

OPENING WITH CAP

402

400

401

OVERFLOW

201

# FIG.5

# FIG.6

# FIG.7

START

S701 — IS WATER LEAKAGE DETECTED?

NO

YES

S702 — STOP ANALYSIS OPERATION

S703 — NOTIFY WATER LEAKAGE

END

# FIG.8

# FIG.9

Z
Y ⊗
X

300

300

200

OPENING WITH CAP

400

500

OVERFLOW

201

601

602

600

# FIG.10

START

S1001 — FIRST WATER LEVEL DETECTED? — NO

YES

S1002 — STOP ACCEPTING NEW SPECIMEN

S1003 — NOTIFY WATER LEAKAGE

S1004 — IS SECOND WATER LEVEL DETECTED? — NO

YES

S1005 — STOP ANALYSIS OPERATION

END

# FIG.11

## INTERNATIONAL SEARCH REPORT

| International application No. |
| --- |
| **PCT/JP2021/043112** |

### A. CLASSIFICATION OF SUBJECT MATTER

*G01N 35/00*(2006.01)i
FI:    G01N35/00 F

According to International Patent Classification (IPC) or to both national classification and IPC

### B. FIELDS SEARCHED

Minimum documentation searched (classification system followed by classification symbols)

G01N35/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2008-232835 A (OLYMPUS CORP.) 02 October 2008 (2008-10-02)<br>entire text, all drawings | 1-9 |
| A | JP 2013-246055 A (TOSHIBA CORP.) 09 December 2013 (2013-12-09)<br>entire text, all drawings | 1-9 |
| A | CD-ROM of the specification and drawings annexed to the request of Japanese Utility Model Application No. 76077/1991 (Laid-open No. 27677/1993) (HITACHI, LTD.) 09 April 1993 (1993-04-09), entire text, all drawings | 1-9 |
| A | JP 7-35760 A (HITACHI, LTD.) 07 February 1995 (1995-02-07)<br>entire text, all drawings | 1-9 |
| A | JP 10-185928 A (SHIMADZU CORP.) 14 July 1998 (1998-07-14)<br>entire text, all drawings | 1-9 |
| A | JP 2001-249140 A (DKK TOA CORP.) 14 September 2001 (2001-09-14)<br>entire text, all drawings | 1-9 |

☐ Further documents are listed in the continuation of Box C.          ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**13 January 2022** | Date of mailing of the international search report<br><br>**01 February 2022** |
| Name and mailing address of the ISA/JP<br><br>**Japan Patent Office (ISA/JP)<br>3-4-3 Kasumigaseki, Chiyoda-ku, Tokyo 100-8915<br>Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2021/043112**

| Patent document cited in search report | | | Publication date (day/month/year) | Patent family member(s) | Publication date (day/month/year) |
|---|---|---|---|---|---|
| JP | 2008-232835 | A | 02 October 2008 | (Family: none) | |
| JP | 2013-246055 | A | 09 December 2013 | (Family: none) | |
| JP | 5-27677 | U1 | 09 April 1993 | (Family: none) | |
| JP | 7-35760 | A | 07 February 1995 | (Family: none) | |
| JP | 10-185928 | A | 14 July 1998 | (Family: none) | |
| JP | 2001-249140 | A | 14 September 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016095133 A